## Europäisches Patentamt

## European Patent Office

## Office européen des brevets

(11) Veröffentlichungsnummer: **0 036 029**
**B1**

(12) **EUROPÄISCHE PATENTSCHRIFT**

(45) Veröffentlichungstag der Patentschrift:
**14.11.84**

(51) Int. Cl.³: **B 63 H 23/30**, F 16 D 47/06,
F 16 H 45/02

(21) Anmeldenummer: **80101319.4**

(22) Anmeldetag: **13.03.80**

(54) Schiffsantrieb mit einer Strömungskupplung und einer Überbrückungskupplung.

(43) Veröffentlichungstag der Anmeldung:
**23.09.81 Patentblatt 81/38**

(45) Bekanntmachung des Hinweises auf die Patenterteilung:
**14.11.84 Patentblatt 84/46**

(84) Benannte Vertragsstaaten:
**FR GB IT NL SE**

(56) Entgegenhaltungen:
**CH - A - 452 380**
**DE - A - 1 817 532**
**DE - C - 280 078**
**GB - A - 191 022**
**GB - A - 547 330**

(73) Patentinhaber: **AKTIEN-GESELLSCHAFT "WESER",**
**Werftstrasse 160 Postfach 210 280,**
**D-2800 Bremen 21 (DE)**

(72) Erfinder: **Schneider, Heinz, Barbarossastrasse 29,**
**D-2800 Bremen (DE)**

ACTORUM AG

## Beschreibung

Die Erfindung betrifft einen Schiffsantrieb mit einer zwischen der Antriebsmaschine und einem Getriebe in der Wellenleitung angeordneten Strömungskupplung und mit einer auf der der Strömungskupplung gegenüberliegenden Seite des Getriebes angeordneten Überbrückungskupplung, deren Primärteil mit dem Primärteil der Strömungskupplung durch eine Welle verbunden ist, die das hohlgebohrte Ritzel des Getriebes durchgreift, welches mit dem Sekundärteil der Strömungskupplung und mit dem Sekundärteil der Überbrückungskupplung fest verbunden ist.

Bei bekannten Schiffsantrieben mit einer Strömungskupplung ist das Kupplungsgehäuse mit dem Getriebegehäuse auf der Getriebeeingangsseite fest verbunden, so dass es mit dem Getriebegehäuse auf einem gemeinsamen Getriebefundament abgestützt ist (DE-PS 1 817 532). Es ist ebenfalls bekannt, Strömungskupplungen mit einer Überbrückungskupplung auszurüsten, um den Schlupf der Strömungskupplung insbesondere während der Fahrt in freiem Wasser zu unterbinden. Eine solche Überbrückungskupplung ist nach dem Stande der Technik als Reibungs- und/oder Lamellenkupplung (DE-OS 2 106 403) oder als Reibungs- und/oder Klauenkupplung (DE-PS 677 927) ausgebildet, wobei die Überbrückungskupplung eine Baueinheit mit der Strömungskupplung darstellt und deren Gewicht erheblich vergrössert. Bei der seitlichen Befestigung des Kupplungsgehäuses an dem Getriebegehäuse führt dies zu einem Kippmoment, welches die Güte der Getriebeanordnung erheblich beeinträchtigt. Die nicht ständig, sondern nur unter besonderen Betriebsbedingungen geforderte Anordnung einer Überbrückungskupplung, zum Beispiel bei Schiffen für die Eisfahrt, bei Schiffen mit langen Reisewegen und vielen Manövern in den Laderevieren, führt bei bekannten Anordnungen ausserdem zu einer umfangreichen Änderung von Bauteilen der Kupplung.

Bekannt sind andererseits Quillschaftausbildungen für hydrodynamische Kupplungen mit mechanischer Überbrückungskupplung, bei der eine das hohlgebohrte Ritzel eines mechanischen Untersetzungsgetriebes durchgreifenden Welle die Primärseiten der hydrodynamischen Kupplung und der mechanischen Überbrückungskupplung miteinander und mit der Antriebswelle der Antriebsmaschine verbindet. Die Sekundärseiten der hydrodynamischen Kupplung und der Überbrückungskupplung sind unmittelbar mit dem Ritzel des mechanischen Untersetzungsgetriebes verbunden. Dadurch ist es möglich, das Schiff bei Fahrten im Revier über die hydrodynamische Kupplung und bei Fahrten im offenen Meer über die mechanische Überbrückungskupplung unmittelbar anzutreiben.

Es ist Aufgabe der Erfindung, die Anordnung einer Überbrückungskupplung für eine Strömungskupplung zum Gewichtsausgleich des asymmetrisch beladenen Getriebegehäuses auszunutzen und Änderungen an der Strömungskupplung im Falle der Anordnung einer Überbrückungskupplung weitestgehend zu vermeiden.

Gemäss der Erfindung wird zur Lösung dieser Aufgabe bei einem Schiffsantrieb der eingangs erwähnten Art vorgeschlagen, dass das Gehäuse der Überbrückungskupplung und das Gehäuse der Strömungskupplung aufeinander gegenüberliegenden Seiten an dem Getriebegehäuse befestigt sind. Durch diese Anordnung wird das Gewicht des Gehäuses der Überbrückungskupplung und der Überbrückungskupplung selbst zum Ausgleich eines erheblichen Teils des Gewichts der meisten schweren Strömungskupplung benutzt.

Die bei bekannten Anordnungen durch einseitige Belastung des Getriebegehäuses unvermeidlichen Beeinträchtigungen können somit nicht mehr auftreten. Ohne Nachteil für das gesamte System und mit Vorteil für den angestrebten Gewichtsausgleich kann die Überbrückungskupplung besonders stabil und schwer ausgebildet und auch zusätzlich mit einem Torsionsschwingungen dämpfenden Zwischenglied (Giesslinger-Kupplung) kombiniert werden, insbesondere wenn stossartige Drehlasten in der Wellenleitung auftreten. Für die Überbrückungskupplung selbst sind Klauenkupplungen oder Reibungskupplungen besonders geeignet, wobei gegebenenfalls auf handelsübliche Ausführungen zurückgegriffen werden kann. Die Anordnung solcher Überbrückungskupplungen ist ohne nennenswerte Änderung der Strömungskupplung durchführbar.

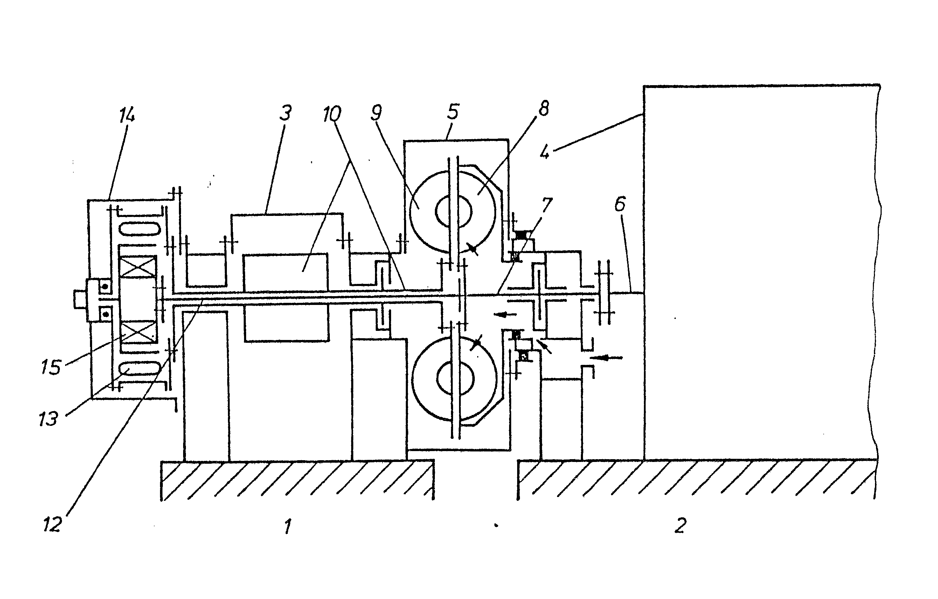

Ein Ausführungsbeispiel einer Anordnung gemäss der Erfindung ist auf der Zeichnung schematisch dargestellt.

Auf getrennten Fundamenten 1 und 2 sind das Gehäuse 3 eines Getriebes und eine Antriebsmaschine, insbesondere ein Antriebsmotor 4, fest verankert. Auf der dem Antriebsmotor 4 zugekehrten Seite des Getriebegehäuses 3 ist das Gehäuse 5 einer Strömungskupplung, zum Beispiel einer Föttinger-Kupplung, mittels einer Flanschverbindung befestigt. Mit der Welle 6 des Antriebsmotors 4 ist die Primärwelle 7 des Primärschaufelrades 8 der Strömungskupplung fest verbunden. Das Sekundärschaufelrad 9 der Strömungskupplung ist an das hohlgebohrte Ritzel 10 angeflanscht. Dieses Ritzel 10 ist im Getriebegehäuse 3 gelagert. In dem Ritzel 10 ist eine mit dem Primärteil der Strömungskupplung verflanschte Welle 12 angeordnet, die an der der Strömungskupplung gegenüberliegenden Seite aus dem Ritzel herausgeführt und im Sekundärteil der Überbrückungskupplung gelagert ist. Die Überbrückungskupplung besteht nach dem Beispiel aus einer Reibungskupplung 13 in einem Gehäuse 14, welches mit dem Getriebegehäuse 3 in gleicher Weise verbunden sein kann wie das Gehäuse 5 der Strömungskupplung. Der Primärteil der Reibungskupplung 13 sitzt auf der Welle 12. Der Sekundärteil ist dagegen mit einem Endflansch des Ritzels 10 verbunden. Zwischen der Welle 12 und dem Primärteil der Reibungskupplung 13 ist bei dem Ausführungsbeispiel ein torsionselastisches Zwischenglied 15 angeordnet, welches nach der allgemein bekannten Geisslinger-Kupplung aufgebaut sein kann. Bei geschlossener Reibungskupplung 13 treibt die Welle 6 des Antriebsmotors 4 über die Wellen 7, 12 unmittelbar das Ritzel des Getriebes an. Bei geöffneter Überbrückungskupplung wird die Strömungskupplung wirksam, so dass das Drehmoment des Antriebsmotors über die Strömungskupplung und das Ritzel in das Getriebe gegeben wird.

### Patentanspruch

Schiffsantrieb mit einer zwischen der Antriebsmaschine (4) und einem Getriebe (3) in der Wellenleitung angeordneten Strömungskupplung (5) und mit einer auf der die Strömungskupplung (5) gegenüberliegenden Seite des Getriebes (3) angeordneten Überbrückungskupplung, deren Primärteil mit dem Primärteil (8) der Strömungskupplung (5) durch eine Welle (12) verbunden ist, die das hohlgebohrte Ritzel des Getriebes durchgreift, welches mit dem Sekundärteil der Strömungskupplung (5) und dem Sekundärteil der Überbrückungskupplung (13) fest verbunden ist, dadurch gekennzeichnet, dass das Gehäuse (14) der Überbrückungskupplung (13) und das Gehäuse der Strömungskupplung auf einander gegenüberliegenden Seiten an dem Getriebegehäuse (3) befestigt sind.

### Claim

Ship's propulsion having a Föttinger coupling (5) between the driving engine (4) and the gear (3) and a bridge coupling installed on the side of the gear being opposite to the Föttinger coupling (5), the primary part of the bridge coupling being connected to the primary part (8) of the Föttinger coupling (5) by means of a shaft (12) that penetrates the bored pinion of the gear, said pinion being attached to the secondary part of the Föttinger coupling (5) and to the secondary part of the bridge coupling (13), characterized in that the housing (14) of the bridge coupling (13) and the housing of the Föttinger coupling are affixed on opposite sides on the gear housing (3).

### Revendication

Propulsion d'un navire dotée d'un accouplement hydraulique (5) situé entre la machine motrice (4) et un rouage (3) dans la transmission ainsi que d'un accouplement de commutation situé sur le côté du rouage opposé à l'accouplement hydraulique (5), la partie primaire de l'accouplement de commutation étant reliée à la partie primaire (8) de l'accouplement hydraulique (5) par un arbre (12) qui pénètre dans le pignon foré du rouage, celui-ci étant attaché à la partie secondaire de l'accouplement hydraulique (5) et à la partie secondaire de l'accouplement de commutation, caractérisé en ce que le boîtier (14) de l'accouplement de commutation (13) et le boîtier de l'accouplement hydraulique sont fixés sur des cotés opposés sur le boîtier de transmission (3).